# DEMANDE DE BREVET EUROPEEN

(11) **EP 2 187 063 A1**
(43) Date de publication de la demande: **19.05.2010**
(21) Numéro de dépôt: 09290816.9
(22) Date de dépôt: 23.10.2009
(51) Int. Cl.: F04D 29/70, F04D 29/42, B01D 35/30, F16J 13/02

(54) **Groupe moto-pompe à filtre**

(30) Priorité: 18.11.2008 FR 0806440
(71) Demandeur: KSB S.A.S, 92635 Gennevilliers (FR)
(72) Inventeur: Devulder, Jean-François, 59850 Nieppe (FR); Desmet, Alain, 62136 Lestrem (FR)
(74) Mandataire: Eidelsberg, Victor Albert

(57) **Abrégé**

Dans ce groupe moto-pompe ayant un filtre (7) dans un réceptacle (6) disposé entre la tubulure (4) d'aspiration et la tubulure (5) de refoulement et accessible par un couvercle (8) vissé sur le réceptacle (6), il est prévu un rail sur la face extérieure du couvercle (8). Un bras coulisse d'une position escamotée à une position déployée dans le rail pour permettre de dévisser le couvercle.

## Description

La présente invention se rapporte aux groupes motopompes et, plus particulièrement, à ceux destinés à pomper l'eau de piscine, tout en la filtrant.

On connaît déjà par US 4 629 557 un groupe moto-pompe ayant un filtre disposé dans un réceptacle entre la tubulure d'aspiration et la tubulure de refoulement. Le filtre est accessible par un couvercle retenu de manière amovible sur le réceptacle. Pour retirer le couvercle du réceptacle en vue de nettoyer le filtre, il est prévu de munir le couvercle de deux oreilles diamétralement opposées. Il est connu aussi de ménager sur la face supérieure du couvercle une tranchée dans laquelle on peut insérer un outil de manoeuvre. Ces moyens de manoeuvre sont nécessaires, parce que le réceptacle en raison de l'aspiration de la pompe est en dépression de sorte que le couvercle est maintenu sur le réceptacle par la dépression et est très difficile à retirer, le joint torique assurant l'étanchéité entre le réceptacle et le couvercle restant fortement fixé au réceptacle.

L'invention pallie cet inconvénient par un groupe moto-pompe, dans lequel retirer le couvercle du réceptacle peut s'effectuer de manière plus aisée.

L'invention est définie à la revendication 1.

En la position escamotée le couvercle n'occupe pas plus de place que le couvercle habituel mais, lorsque l'on souhaite dévisser le couvercle, on déploie le bras, ce qui permet, grâce au bras de levier ainsi créé, d'appliquer un couple très grand qui surmonte le couple résistant dû à l'application du joint torique sur le réceptacle.

L'une des extrémités du bras peut être articulée sur le couvercle, mais on préfère de beaucoup, pour pouvoir appliquer au couvercle un grand couple de rotation, sans détruire une articulation, que le bras coulisse sur un rail immobilisé sur la face supérieure du couvercle.

Pour que le bras ne puisse pas sortir intempestivement du rail sur lequel il coulisse, il est prévu une butée limitant le déploiement du bras à la position déployée. Cette butée est de préférence ménagée sur le rail. Pour que le couple moteur appliqué par celui qui manoeuvre le bras en la position déployée soit bien transmis au couvercle, il est prévu deux appuis ménagés sur la face supérieure du couvercle et en contact libre avec respectivement les faces latérales opposées du rail. Lorsque l'opérateur tourne le bras pour dévisser le couvercle du réceptacle, la force qu'il applique est transmise efficacement au couvercle par l'intermédiaire de ces deux appuis.

Suivant un mode de réalisation perfectionné, permettant d'appliquer au couvercle un couple de rotation plus grand lorsqu'on le dévisse, une rallonge du bras est montée coulissante sur le bras. Cette rallonge augmente le bras de levier. Mais néanmoins, comme elle est montée coulissante sur le bras en la position escamotée elle ne dépasse pas du périmètre du couvercle.

De la même façon que pour le bras, il est prévu, pour empêcher la rallonge de coulisser hors du bras, une butée sur la face intérieure de la rallonge venant buter sur une contre butée sur la face supérieure du bras lorsque la rallonge est déployée.

Au dessin annexé, donné uniquement à titre d'exemple :
La figure 1 est une vue schématique d'un groupe moto-pompe suivant l'invention pour pomper de l'eau de piscine, tandis que

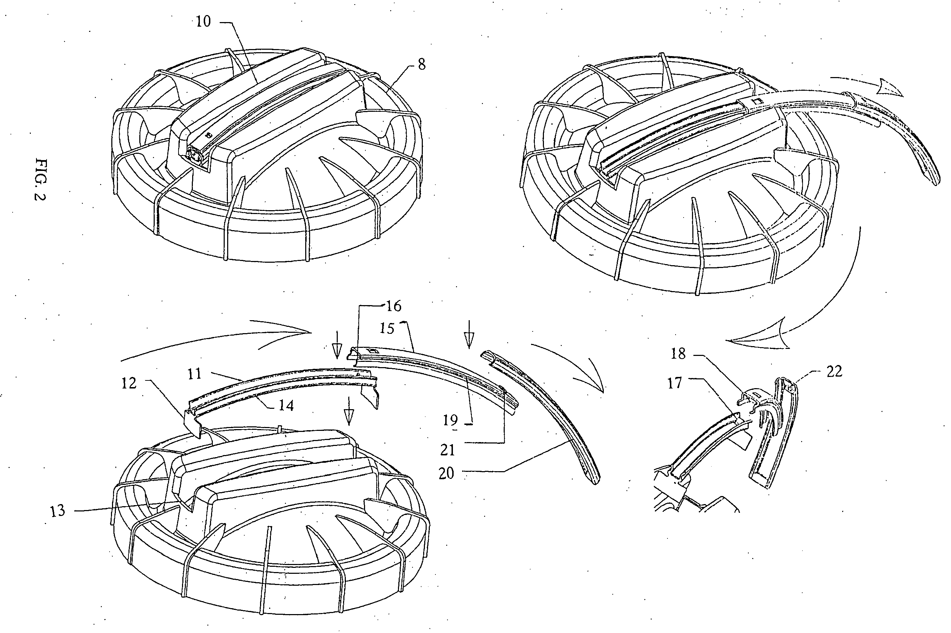

La figure 2 est une vue en perspective éclatée de la partie de couvercle du groupe moto-pompe de la figure 1.

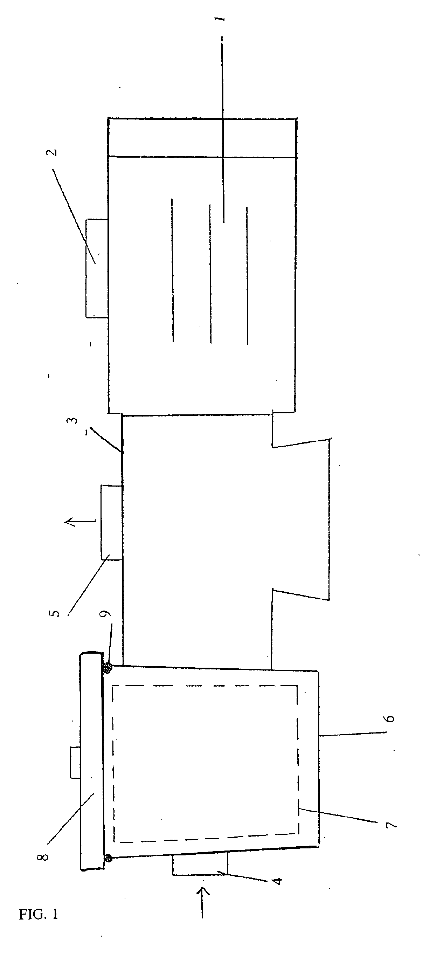

Le groupe moto-pompe représenté à la figure 1 comprend un moteur 1 électrique qui est muni d'une boîte 2 à borne et qui est boulonné à un corps 3 de pompe ayant, outre une roue, une tubulure 4 d'aspiration et une tubulure 5 de refoulement. Un réceptacle 6 d'un filtre 7 en panier est interposé entre la tubulure 4 d'aspiration et la tubulure 5 de refoulement de manière à filtrer l'eau de la piscine, qui est aspirée puis refoulée.

Afin de pouvoir nettoyer le filtre de temps à autre, le réceptacle 6 est muni d'un couvercle 8 circulaire bombé qui est vissé sur le réceptacle avec interposition d'un joint 9 torique. En raison de la dépression qui règne dans le réceptacle 6 lorsque la pompe fonctionne, le couvercle 8 adhère fortement, notamment par son joint 9, au réceptacle 6 de sorte qu'il est très difficile de le dévisser.

Pour y parvenir cependant, la face supérieure du couvercle est munie de deux nervures 10 diamétralement opposées, ce qui permet de monter les moyens de dévissage du couvercle dans les deux sens, mais pouvant en principe se réduire à deux plots si l'on accepte de ne monter les moyens de dévissage du couvercle que d'un seul côté. Dans l'intervalle entre les deux nervures 10 est assujetti sur le couvercle un rail 11. Le rail est constitué d'une pièce en U. Aux deux extrémités de l'âme du rail sont soudées ou pliées deux plaquettes 12 dont les faces extérieures viennent épouser la forme de deux contreforts 13 réunissant les extrémités en regard l'une de l'autre des deux nervures 10. Le rail 11 se trouve ainsi emboîté entre les deux contreforts 13 et les nervures 10. Sur les faces latérales extérieures des branches du rail sont ménagées respectivement deux rainures 14 permettant de faire coulisser un bras 15 dont les faces latérales intérieures sont munies de profilés 16 correspondant aux rainures 14. A l'une des extrémités du rail 11 sur la face extérieure de son âme est ménagée une butée 17 coopérant avec une contre butée 18, dont est pourvue la face intérieure de l'âme du bras 15 à l'une des extrémités de celui-ci.

Sur les faces latérales extérieures des branches du bras 15 sont ménagées deux rainures 19 destinées à assurer le coulissement d'une rallonge 20 par coopération de ces rainures 19 avec des profilés 20 conjugués sur les faces latérales intérieures des branches de la rallonge 20 constituée elle aussi en forme de U.

A l'une des extrémités du bras 15 sur la face supérieure de l'âme est ménagée une contre butée 21 extérieure coopérant avec une butée 22 sur la face intérieure de la rallonge 20 pour empêcher celle-ci de sortir intempestivement du bras 15.

Pour dévisser le couvercle, on déploie le bras 15 et de préférence également la rallonge 20 en dehors de la circonférence du couvercle 8 et on applique au bras et à la rallonge une force qui donne un couple très puissant permettant de débloquer le couvercle 8 du réceptacle 6.

## Revendications

1. Groupe moto-pompe ayant un filtre (7) dans un réceptacle (6) disposé entre la tubulure (4) d'aspiration et la tubulure (5) de refoulement et accessible par un couvercle (8) vissé sur le réceptacle (6) et pourvu de moyens permettant de dévisser le couvercle (8) du réceptacle (6), **caractérisé en ce que** lesdits moyens comprennent un bras (15) relié au couvercle (8) et monté de manière à passer d'une position déployée, dans laquelle l'extrémité libre du bras dépasse du périmètre du couvercle (8) pour l'application d'un couple de rotation pour dévisser le couvercle (8), à une position escamotée, dans laquelle l'extrémité libre du bras est rapprochée du couvercle (8).

2. Groupe moto-pompe suivant la revendication 1, **caractérisé en ce que** l'extrémité libre du bras ne dépasse pas du périmètre du couvercle en la position escamotée.

3. Groupe moto-pompe suivant la revendication 1 ou 2, **caractérisé par** un rail (11) qui est monté sur la face extérieure du couvercle (8) et sur lequel le bras (15) coulisse et par deux appuis (10) ménagés sur la face supérieure du couvercle et en contact libre avec respectivement les faces latérales opposées du rail (11).

4. Groupe moto-pompe suivant la revendication 3, **caractérisé par** une butée (17) limitant le déploiement du bras à la position déployée.

5. Groupe moto-pompe suivant l'une des revendications 1 à 4, **caractérisé par** une rallonge (20) du bras (15), montée coulissante sur le bras (15).

6. Groupe moto-pompe suivant la revendication 5, **caractérisé par** une butée (22) sur la face intérieure de la rallonge (20) venant buter sur une contre-butée (18) sur la face supérieure du bras (15) lorsque la rallonge est déployée.
